# EUROPEAN PATENT APPLICATION

(11) **EP 4 148 928 A1**
(43) Date of publication of application: **15.03.2023**
(21) Application number: 22194152.9
(22) Date of filing: 06.09.2022
(51) Int. Cl.: H02G 15/064, H02G 15/115, B61G 5/10, H01R 31/06

(54) **CABLE CONNECTION STRUCTURE AND CONNECTOR-EQUIPPED CABLE**

(30) Priority: 10.09.2021 JP 2021147900
(71) Applicant: Hitachi Metals, Ltd., Koto-ku, Tokyo 135-0061 (JP)
(72) Inventor: MURATA, Wataru, Tokyo (JP); AISHIMA, Yukinori, Tokyo (JP); KAWASE, Yusuke, Tokyo (JP)
(74) Representative: Betten & Resch

(57) **Abstract**

A connector-equipped cable (2) is composed of a cable (3), and a connector (5) attached to an end of the cable (3). The connector (5) includes a housing (51) including a first portion (511) to which the end of the cable (3) is inserted and a tubular second portion (512) formed on an outer periphery side of the first portion (511). A cable connection structure (1) is composed of two connector-equipped cables (2, 2). The two connector-equipped cables (2, 2) are fitted with each other in an axial direction (X) of the cable (3) to electrically connect the two connector-equipped cables (2, 2) to each other.

## Description

### TECHNICAL FIELD

The present invention relates to a cable connection structure and a connector-equipped cable (i.e., a cable with connector).

### BACKGROUND ART

Patent Literature 1 discloses in FIG. 4 a high-voltage device system in which two high-voltage cables on a roof of a railway car (i.e., rolling stock) are connected via a direct-joint device. The high-voltage device system described in Patent Literature 1 includes the two high-voltage cables, two cable connector parts to which the high-voltage cables are inserted respectively, and the direct-joint device that electrically connects the two cable connectors. The cable connector part includes a base tube part to which the high-voltage cable is inserted and a mating tube part that is formed perpendicular to the base tube part, and the cable connector unit is formed substantially T-shape as a whole. The direct-joint device further includes a base part, and two joint connector parts that protrude from the base part toward one side. The two cable connector parts are then fitted into the joint connector parts that are different from each other in an extending direction of the mating tube part (i.e., perpendicular to the high-voltage cables).

### CITATION LIST

### PATENT LITERATURE

Patent Literature 1: JP2012-147635A

### SUMMARY OF THE INVENTION

However, in the high-voltage device system described in the Patent Literature 1, there are drawbacks such as the increase in the size of the device in an alignment direction of the two cable connector parts and the direct-joint device. Therefore, there is room for improvement from the viewpoint of miniaturization.

Therefore, in light of the circumstances mentioned above, the object of the present invention is to provide a cable connection structure and a connector-equipped cable that can be miniaturized.

To achieve the above object, one aspect of the present invention provides: a cable connection structure comprising two connector-equipped cables, each of which includes a cable and a connector attached to an end of the cable, wherein the connector includes a housing including a first portion to which the end of the cable is inserted and a second portion formed on an outer periphery side of the first portion, and wherein the two connector-equipped cables are fitted with each other in an axial direction of the cable to electrically connect the two connector-equipped cables to each other.

To achieve the above object, another aspect of the present invention provides: a connector-equipped cable including a cable and a connector attached to an end of the cable wherein the connector includes a housing including a first portion to which the end of the cable is inserted and a tubular second portion formed on an outer periphery side of the first portion along the first portion.

### [Effects of the Invention]

According to the present invention, it is possible to provide a cable connection structure and a connector-equipped cable that can be miniaturized.

### BRIEF DESCRIPTION OF DRAWINGS

FIG. 1 is a plan view of a connector-equipped cable in the first embodiment.
FIG. 2 is a plan view of a cable connection structure in the first embodiment.
FIG. 3 is a cross-sectional view of the cable connection structure in the first embodiment.
FIG. 4 is an enlarged view of a part in FIG. 3.
FIG. 5 is an exploded plan view of the cable connection structure in the first embodiment.
FIG. 6 is an exploded cross-sectional view of the cable connection structure in the first embodiment.
FIG. 7 is a front view of a connecting conductor in the first embodiment.
FIG. 8 is a cross-sectional view taken along line VIII-VIII in FIG. 7.
FIG. 9 is a cross-sectional view taken along line IX-IX in FIG. 7.
FIG. 10 is a plan view of a railway car with the cable connection structure in the first embodiment.
FIG. 11 is a plan view of a connector-equipped cable in a modified example of the first embodiment.
FIG. 12 is a front view of a connecting conductor in the second embodiment.
FIG. 13 is a cross-sectional view taken along a line XIII-XIII in FIG. 12.
FIG. 14 is a cross-sectional view taken along a line XVI-XVI in FIG. 12.
FIG. 15 is a front view of a connecting conductor in a modified example of the second embodiment.

### BEST MODE FOR CARRYING OUT THE INVENTION

### [First Embodiment]

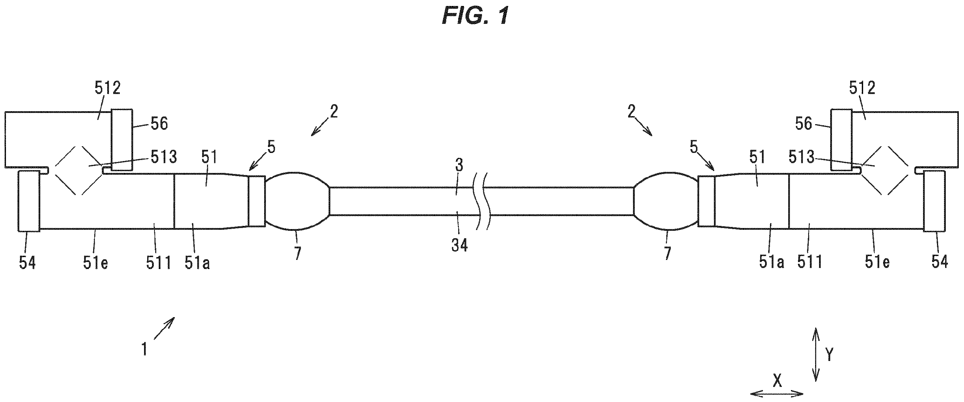

The first embodiment of the invention will be explained below by referring to FIGS. 1 to 11. The embodiment described below is shown as a preferred concrete example for carrying out the invention, and some parts are specific examples of various technical matters that are technically favorable to the invention. However, the technical scope of the invention is not limited to this particular mode.

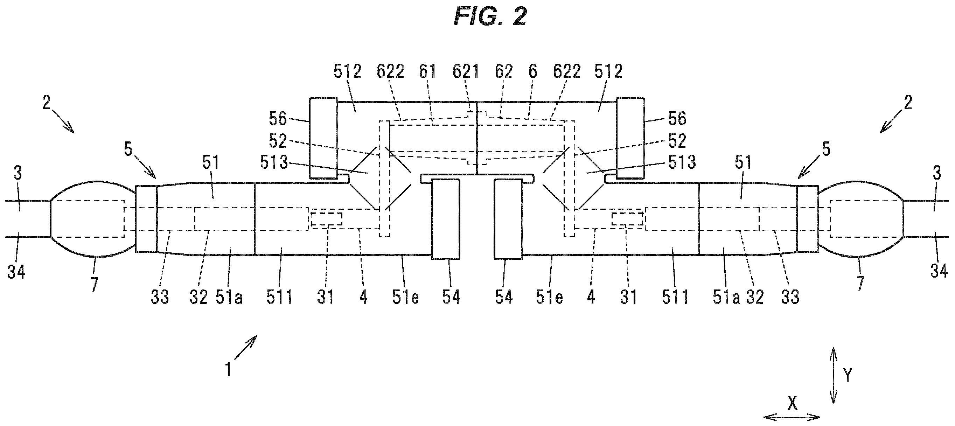

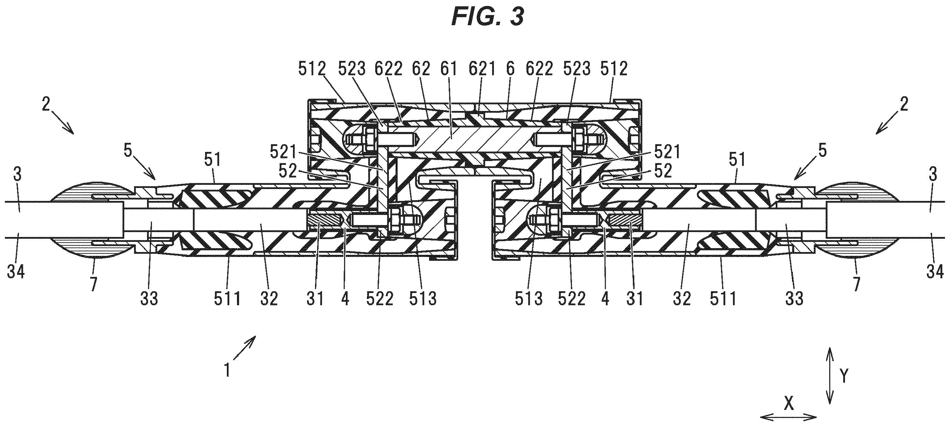

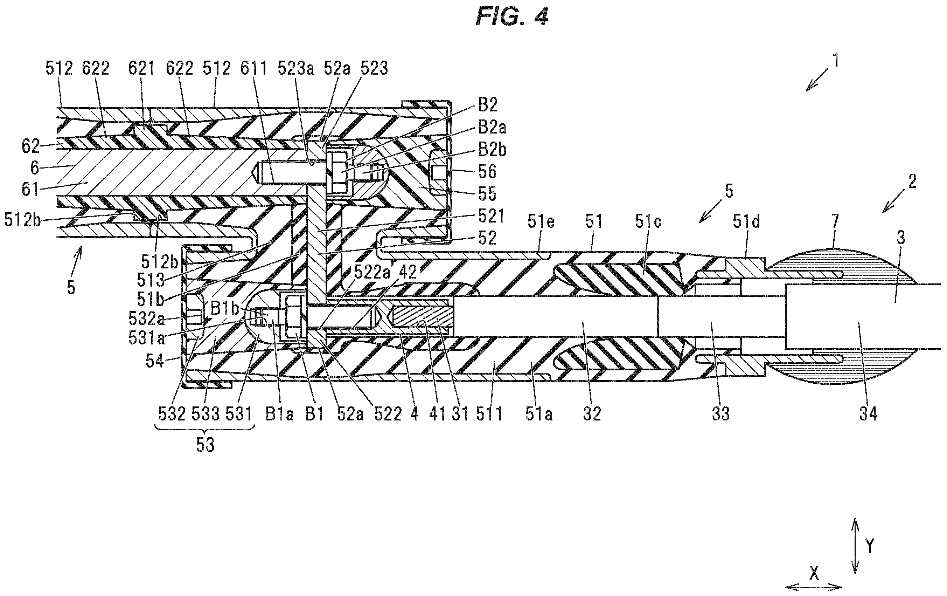

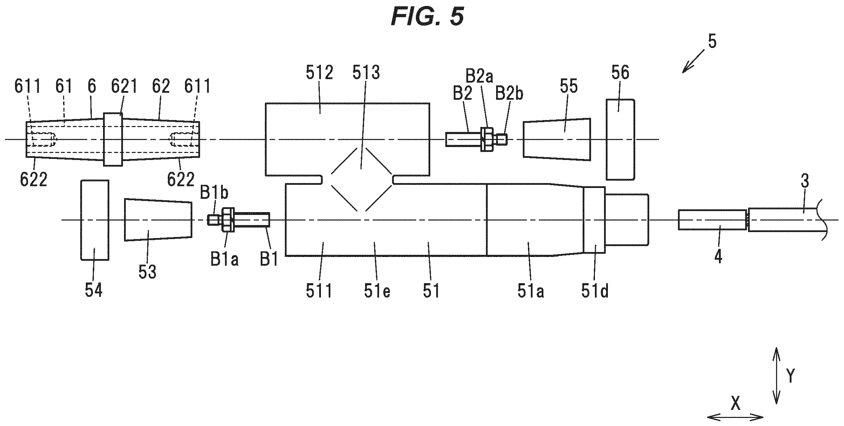

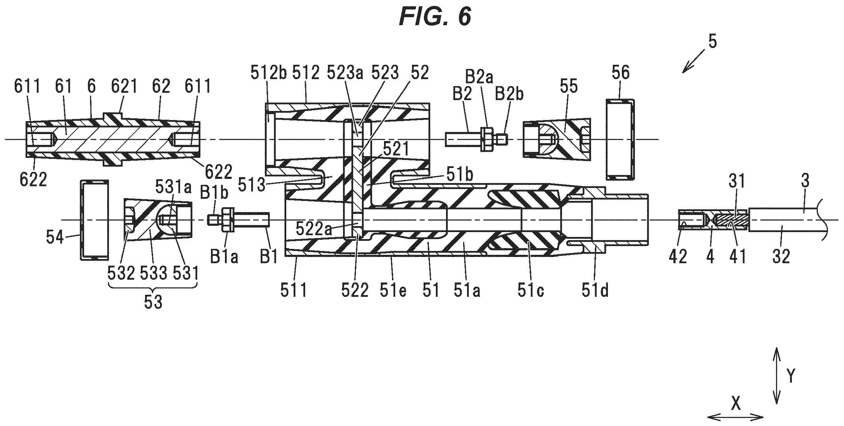

FIG. 1 is a plan view of a connector-equipped cable 2 in the first embodiment. FIG. 2 is a plan view of a cable connection structure 1 in the first embodiment. FIG. 3 is a cross-sectional view of the cable connection structure 1 in the first embodiment. FIG. 4 is an enlarged view of a part in FIG. 3. FIG. 5 is an exploded plan view of the cable connection structure 1 in the first embodiment. FIG. 6 is an exploded cross-sectional view of the cable connection structure 1 in the first embodiment.

As shown in FIG. 2 to FIG. 6, the cable connection structure 1 comprises two connector-equipped cables (i.e., a cable with two connectors) 2, 2, each of which includes a cable 3 and two connectors 5 attached to both ends of the cable 3, and a relay member 6 that mechanically and electrically relays the two connector-equipped cables 2, 2. Hereinafter, a direction in which the center axis of the cable 3 extends is referred to as "an axial direction X".

The two connector-equipped cables 2, 2 are arranged symmetrically to each other with respect to the axial direction X and have an equivalent configuration. Hereinafter, the connector-equipped cable 2 may be explained below by focusing on one of the two connector-equipped cables 2, 2, but unless otherwise noted, the connector-equipped cable 2 on the other has a similar configuration.

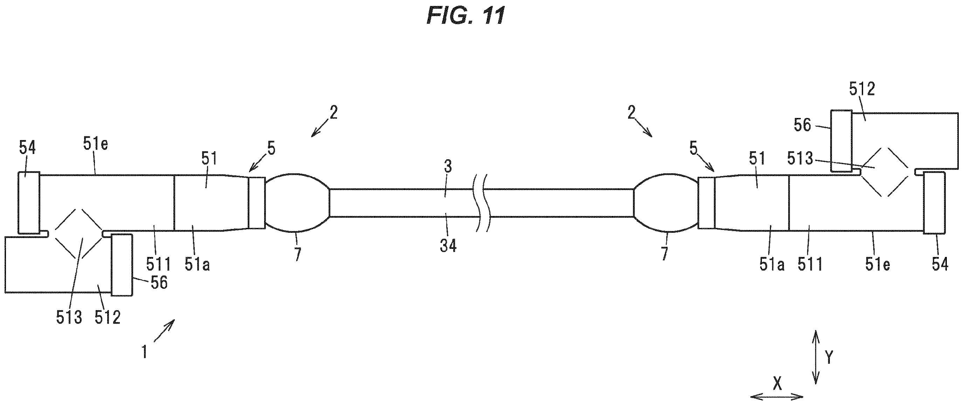

The connector-equipped cable 2 is mainly composed of the cable 3, and cable terminals 4, each of which is fixed to a cable center conductor 31 of the cable 3, and the connectors 5, into each of which an end of the cable 3 is inserted. As shown in FIG. 1, in the present embodiment, the connector-equipped cable 2 includes a pair of connectors 5 on both ends of the cable 3. The pair of connectors 5 provided at the connector-equipped cable 2 has a similar configuration. In the state where the cable 3 is stretched straight without twisting, the pair of connectors 5 are arranged in such a manner that second portions 512, 512, to be described below, are opposite each other in the axial direction X. As shown in FIG. 11, the side where the second portion 512 is located with respect to the first portion 511 to be described below may be opposite to each other in the pair of connectors 5 in the state where the cable 3 is stretched straight without twisting. The connector-equipped cable 2 should have the connector 5 at least one end of the cable 3. Also, the pair of connectors 5 provided in the connector-equipped cable 2 need not be identical to each other. For example, one end of the connector-equipped cable 2 may have the connector 5 as described in the present embodiment, and the other end of the connector-equipped cable 2 may have a connector different from the connector 5 as described in the present embodiment.

As shown in FIGS. 3 and 4, the cable 3 comprises a cable center conductor 31, a cable inner semi-conductive layer (not shown), a cable insulator 32, a cable outer semi-conductive layer 33, a cable shield layer (not shown), and a cable sheath 34. The cable center conductor 31 is composed of a twisted wire. The cable inner semi-conductive layer and the cable outer semi-conductive layer 33 are made of a polymer-based material in which conductive powder is dispersed to impart electrical conductivity, thus reducing the concentration of the electric field. The cable shield layer is formed, for example, by winding a wire around the cable outer semi-conductive layer 33 and is connected to ground potential when using the cable connection structure 1. The cable sheath 34 is composed of, e.g., electrically insulative rubber, and constitutes an outermost layer of the cable 3. Hereinafter, the one side of the axial direction X where the cable 3 is pulled out from a housing 51 is referred to as an axial direction base end-side (i.e., axial proximal end-side), and the other side is referred to as an axial direction tip end-side (i.e., axial distal end-side). For example, in each of FIGS. 2 and 3, for the connector-equipped cable 2 on the right, the axial distal end-side is on the left side of the paper, whereas the axial proximal end-side is on the right side of the paper. For the connector-equipped cable 2 on the left side, the axial distal end-side is on the right side of the paper, and the axial proximal end-side is on the left side of the paper. The cable 3 is stripped from the axial distal end-side to expose the cable center conductor 31, the cable insulator 32, and the cable outer semi-conductive layer 33 sequentially. The cable terminal 4 is secured to the exposed cable center conductor 31 in the cable 3.

The cable terminal 4 is composed of a substantially cylindrical conductor that extends in the axial direction X. As shown in FIGS. 4 and 6, the cable terminal 4 is formed with a crimping hole 41, which opens at an axial proximal end surface, and a female threaded hole 42, which opens at an axial distal end surface. The cable terminal 4 is inserted into the crimping hole 41 and the cable terminal 4 is crimped toward the cable center conductor 31, which provides a mechanical and electrical connection between the cable center conductor 31 and the cable terminal 4. As shown in FIG. 4, the female threaded hole 42 formed at the cable terminal 4 is threaded with a bolt B1for the mechanical and electrical connection between the cable terminal 4 and a connecting conductor 52, to be described below. The exposed cable insulator 32 and the exposed cable center conductor 31 in the cable 3 together with the cable terminal 4 are inserted into the housing 51 of the connector 5.

As shown in FIGS. 4 and 6, the connector 5 comprises the housing 51, the connecting conductor 52 held in the housing 51, a first stopper (i.e., first plug member) 53 and a first cover 54, which block an opening at an axial distal end of the first portion 511, to be described below, in the housing 51, and a second stopper (i.e., second plug member) 55 and a second cover 56, which block an opening at an axial proximal end of the second portion 512, to be described below, in the housing 51.

The housing 51 comprises an insulator 51a a first semi-conductive layer 51b, a second semi-conductive layer 51c, a tubular member 51d, and a protective cover 51e, that are formed integrally (e.g., as one piece). The housing 51 can be manufactured by insert molding, including a step of arranging members constituting the housing 51 (i.e., the first semi-conductive layer 51b, the second semi-conductive layer 51c, the tubular member 51d, and the protective cover 51e) and the connecting conductor 52 within a mold for forming the insulator 51a, a step of injecting and curing a molten resin as a material of the insulator 51a into the mold.

The insulator 51 a is composed of polymer-based materials such as silicone rubber, ethylene propylene rubber (i.e., EPM), and ethylene propylene diene rubber (EPDM). The first and second semi-conductive layers 51 b and 51c are each made of polymer-based materials in which the conductive powder is dispersed to impart electrical conductivity. As shown in FIG. 4, the first semi-conductive layer 51b is placed around the connecting conductor 52 and around the cable terminal 4 and the end of the cable 3, so that the concentration of electrical field around the connecting conductor 52, the cable terminal 4, and the end of the cable 3 is relaxed. The second semi-conductive layer 51c is located around the cable insulator 32 and the cable outer semi-conductive layer 33, which relaxes the concentration of electrical field around the cable insulator 32. The tubular member 51d is located at the end of the axial proximal end of the first portion 511, to be described below, in the housing 51, and forms an insertion opening for inserting the cable 3 into the housing 51. A space between the tubular member 51d and the cable 3 is sealed with a sealing portion 7 to ensure water tightness. The tubular member 51d is composed of a material that can be well bonded to the sealing portion 7. For example, the sealing portion 7 is formed by wrapping polyethylene tape with adhesive, epoxy tape with adhesive, etc., and the tubular member 51d is made of metals such as brass, or an aluminum alloy. The protective cover 51e is composed of metals such as brass, or an aluminum alloy. The protective cover 51e constitutes an outer surface of the connector 5 to protect the connector 5.

The housing 51 comprises the tubular first portion 511 into which the end of the cable 3 is inserted, the tubular second portion 512 formed to be parallel to the first portion 511, and a third portion 513 to connect the first portion 511 and the second portion 512 to each other.

Each of the first portion 511 and the second portion 512 is formed in a long cylindrical shape in the axial direction X. The first portion 511 and the second portion 512 are formed side by side so that their central axes are substantially parallel. In the axial direction X, the second portion 512 is shorter than the first portion 511. As shown in FIG. 3, the two connector-equipped cables 2, 2 are fitted in the axial direction X via the relay member 6 at the respective second portions 512, 512. To facilitate the fitting between the second portions 512, 512, the axial distal end of the second portion 512 protrudes more toward the axial distal end-side than the axial distal end of the first portion 511. The third portion 513 connects the first portion 511 to the second portion 512 at a location closer to the axial distal end of the first portion with respect to a middle position of the first portion 511 in the axial direction X. Hereinafter, a direction perpendicular to the axial direction X, along which the first portion 511 and the second portion 512 are aligned, is referred to as an alignment direction Y. The connecting conductor 52 is provided to penetrate the third portion 513 in the alignment direction Y.

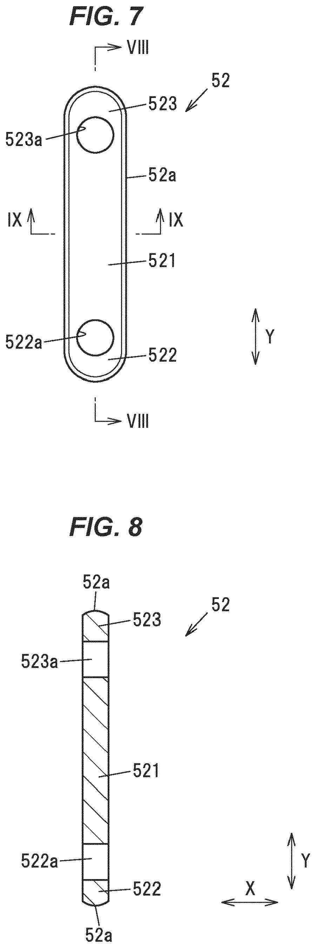

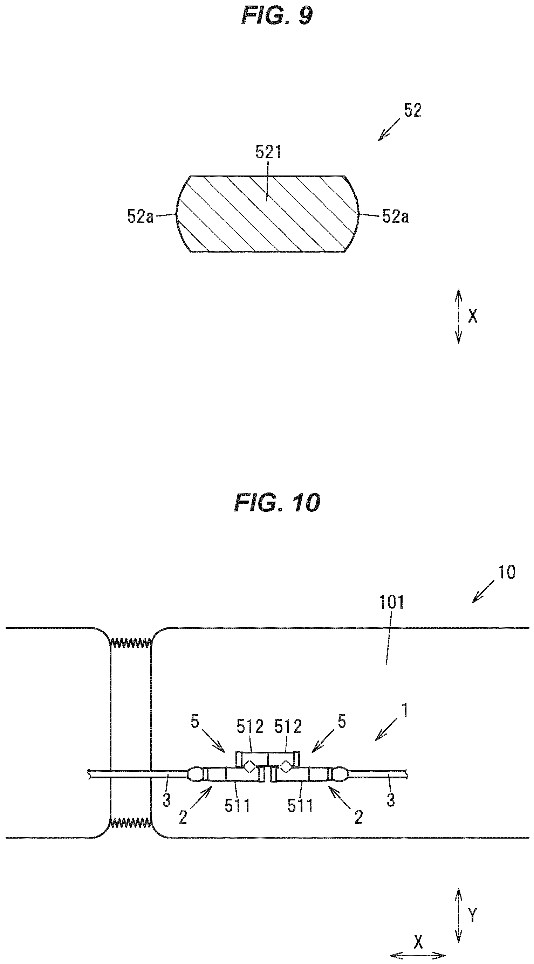

FIG. 7 is a front view of the connecting conductor 52 in the first embodiment. FIG. 8 is a cross-sectional view taken along a line VIII-VIII in FIG. 7. FIG. 9 is a cross-sectional view taken along a line IX-IX in FIG. 7. The connecting conductor 52 is composed of high conductivity material such as copper alloy. The connecting conductor 52 is formed into a plate with a long length in the alignment direction Y and a thickness in the axial direction X direction. Both sides in the alignment direction Y of the connecting conductor 52 are formed in planes perpendicular to the axial direction X. An outer peripheral surface 52a of the connecting conductor 52 is curved in an arched cross-section, the substantially entire surface of which is in contact with the first semi-conductive layer 51b.

As shown in FIGS. 4 and 6, the connecting conductor 52 comprises an embedded portion 521 embedded in the first semi-conductive layer 51b, a cable-connecting portion 522 exposed inside the first portion 511, and a relay member-connecting portion 523 exposed inside the second portion 512. The cable-connecting portion 522 and the relay member-connecting portion 523 each have bolt insertion holes 522a and 523a penetrating through the axial direction X. The cable-connecting portion 522 is tightened to the cable terminal 4 with the bolt B1, and the relay member-connecting portion 523 is tightened to the relay member 6 with the bolt B2.

As shown in FIG. 4, the exposed cable insulator 32 and the exposed cable center conductor 31 in the cable 3 together with the cable terminal 4 are inserted at the axial proximal end of cable-connecting portion 522 inside the first portion 511. An inner diameter of a portion for accommodating the cable insulator 32 at the free state (i.e., without the cable 3 being inserted) in the first portion 511 is smaller than an outer diameter of the cable insulator 32 at the free state (i.e., without the cable 3 being inserted into the first portion 511). When the cable 3 is inserted into the first portion 511, the inner diameter of the first portion 511 is enlarged in the cable insulator 32.

When the cable 3 is inserted into the first portion 511, the first semi-conductive layer 51b contacts the axial distal end of the cable insulator 32 all around (i.e., at an entire periphery), and the second semi-conductive layer 51c contacts the cable insulator 32 and the cable outer semi-conductive layer 33 at a position closer to the axial proximal end with respect to the first semi-conductive layer 51b. Then, in the state where the cable 3 is inserted into the first portion 511, the bolt B1 is inserted into the bolt insertion hole 522a of the cable-connecting portion 522 and is screwed into the female threaded hole 42 of the cable terminal 4, thereby mechanically and electrically connecting the cable-connecting portion 522 and the cable terminal 4 to each other.

The bolt B1 has a male threaded portion B1b extended from a head B1a toward the axial distal end. The male threaded portion B1b is threaded into the first plug member 53.

The first plug member 53 has a metal nut member 531 formed with a female threaded hole 531a into which the male threaded portion B1b is threaded, a metal fitting member 532 formed with a square hole 532a for mating a square driving projection of a socket wrench (not shown), and a resin mold 533 for integrating the metal nut member 531 and the metal fitting member 532. The first plug member 53 is secured to the bolt B1 by using the socket wrench to screw the male threaded portion B1b of the bolt B1 into the female threaded hole 531a of the nut member 531. The first plug member 53 blocks the opening at the axial distal end of the first portion 511. In the state where the opening at the axial distal end of the first portion 511 is blocked by the first plug member 53, the axial distal end of the first portion 511 is covered by the first cover 54, which is composed of polymer-based materials (silicone rubber, ethylene propylene rubber (i.e., EPM), ethylene propylene diene rubber (EPDM), etc.).

The relay member 6 has a relay conductor 61, which electrically connects the relay member-connecting portions 523, 523 of the two connector-equipped cables 2, 2 to each other, and a relay insulator 62, which covers an outer periphery of the relay conductor 61. The relay conductor 61 is formed in a long length in the axial direction X, and both ends in the axial direction X are exposed from the relay insulator, 62. At each of both ends in the axial direction X of the relay conductor 61 is formed with a female threaded hole 611 into which the bolt B2 is screwed. The relay insulator 62 is composed of an electrically insulative resin and covers the relay conductor 61 all around (i.e., at an entire periphery). The relay insulator 62 has a circular annular portion (e.g., torus) 621 at the center of the axial direction X, and tapered portions 622, 622 at both ends in the axial direction X of the annular portion 621, with an outer diameter being reduced according to a distance from the annular portion 621. The annular portion 621 is formed to protrude outwardly with respect to the tapered portion 622.

As shown in FIG. 4, a portion where the tapered portion 622 of the relay member 6 is formed is inserted into the axial distal end of the relay member-connecting portion 523 inside the second portion 512. At the axial distal end of the second portion 512, a step portion (i.e., a level difference) 512b with an inner diameter larger than an inner diameter of a portion adjacent to the axial proximal end-side is formed. In the state where the tapered portion 622 is inserted into the second portion 512, the annular portion 621 of the relay member 6 is inserted into the step portion 512b. Then, in the state where the tapered portion 622 of the relay member 6 is inserted inside the second portion 512, the bolt B2 is inserted into the bolt hole 523a of the relay member-connecting portion 523 and is screwed into the female threaded hole 611 of the relay conductor 61, thereby mechanically and electrically connecting the relay member-connecting portion 523 and the relay conductor 61 to each other. The connection between the relay member 6 and the two second portions 512, 512 results in the fitting of the second portions 512, 512 of the two connector-equipped cables 2, 2 to each other in the axial direction X via the relay member 6, and the two connector-equipped cables 2, 2 are electrically connected to each other.

Like the bolt B1, the bolt B2 has a male threaded portion B2b extended from a head B2a toward the axial distal end. The male threaded portion B2b is threaded into the second plug member 55. The second plug member 55 has the same configuration as the first plug member 53, so the overlapping explanation is omitted.

As shown in FIGS. 2 and 3, in the state where the two connector-equipped cables 2, 2 and the relay member 6 are connected, the second portions 512, 512 of the two connector-equipped cables 2, 2 abut each other in the axial direction X, and the relay member 6 fits inside the two second portions 512, 512. However, a gap (e.g., a vacant space) is formed between the two second portions 512, 512 in the axial direction X, and a part of the relay member 6 (e.g., the annular portion 621) may be exposed from the gap. The two first portions 511, 511 are located on each other (i.e., at an overlapping position) in the axial direction X, while the two second portions 512, 512 are located on each other (i.e., at an overlapping position) in the axial direction X. As viewed from the axial direction X, the central axes of the two first portions 511, 511 are formed at the substantially equivalent location of each other, while the central axes of the two second portions 512, 512 are formed at the substantially identical location of each other.

FIG. 10 is a plan view of a railway car 10 with the cable connection structure 1 in the first embodiment. The cable connection structure 1 including the two connector-equipped cables 2, 2 and the relay member 6 is placed on a roof 101 of the railway car 10, for example, and can be used to mechanically and electrically connect the two cables 3, 3. In the state where the cable connection structure 1 is installed on the roof 101 of the railway car 10, the cable connection structure 1 is fixed on the roof 101 with both the axial direction X and the alignment direction Y being horizontal. This prevents the entire cable connection structure 1 from protruding vertically upwards from the roof 101, thereby reducing the air resistance of the railway car 10 when traveling. The cable connection structure 1 is secured to the roof 101, for example, by using a U-shaped saddle band or other fixing brackets to press the cable 3 on the roof 101.

### (Functions and effects of the first embodiment)

In the cable connection structure 1 according to the present embodiment, the connector 5 has the housing 51 with the first portion 511, to which the end of the cable 3 is inserted, and the second portion 512 formed on the outer periphery side of the first portion 511. In addition, the second portions 512, 512 of the two connector-equipped cables 2 fit with each other in the axial direction X to electrically connect the two connector-equipped cables 2, 2 to each other. Therefore, it is possible to reduce the size of the cable connection structure 1 in the alignment direction Y. For comparison, in the configuration described in Patent Literature 1 (JP2012-147635A), the two high-voltage cables are connected via the direct-joint device aligned with the cable connector parts in the direction perpendicular to the axial direction X, which is likely to lead to the increase in the size of the device in the alignment direction of the cable connector parts and the direct-joint device, which is the direction perpendicular to the axial direction X.

Also, the axial distal end of the second portion 512 protrudes more distal than the axial distal end of the first portion 511. Therefore, when the two second portions 512, 512 are fitted in the axial direction X, it is possible to suppress the interference between the first portions 511, 511, for example, which reduces the workability.

The relay member 6 is inserted inside each of the two second portions 512, 512 and connects the two relay member-connecting portions 523, 523 to each other. Therefore, mechanical and electrical connections between the two second portions 512, 512 can be realized in a simple configuration.

The first portions 511, 511 of the two connector-equipped cables 2, 2 are located on each other in the axial direction X, while the second portions 512, 512 of the two connector-equipped cables 2, 2 are located on each other in the axial direction X. Thus, it is possible to reduce further the overall size of the cable connection structure 1.

In the present embodiment, the relay member 6 and the two connector-equipped cables 2, 2 are tightened in the axial direction X using the bolts B2. Therefore, the space at the e axial proximal end of the second portion 512 provides a working space for the connection between the relay member 6 and the two connector-equipped cables 2, 2. Therefore, there is no need to provide a working space in the area adjacent to the connector-equipped cable 2 in the direction perpendicular to the axial direction X. Thus, even if the room on the roof 101 of the railway car 10 is small, it is possible to place the cable connection structure 1 on the roof 101 to tighten the connection between the relay member 6 and the two connector-equipped cables 2, 2.

As described above, according to the present embodiment, it is possible to provide the cable connection structure and the connector-equipped cable that can be miniaturized.

### [The second embodiment]

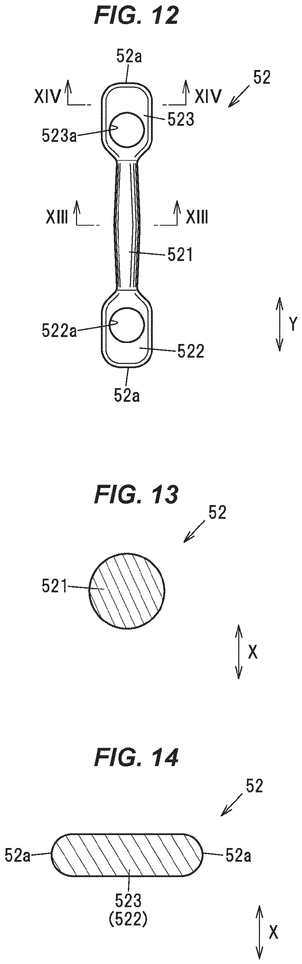

FIG. 12 is a front view of a connecting conductor 52 in the second embodiment. FIG. 13 is a cross-sectional view taken along a line XIII-XIII in FIG. 12. FIG. 14 is a cross-sectional view taken along line XVI-XVI in FIG. 12. The present embodiment is a modification of the configuration of the connecting conductor 52, while maintaining the same basic structure as the first embodiment. The connecting conductor 52 in the present embodiment is configured in such a manner that each of the cable-connecting portion 522 and the relay member-connecting portion 523 is formed in a plate shape with a thickness in the axial direction X, as shown in FIG. 14, and that the embedded portion 521 is formed in a substantially circular cross-section, as shown in FIG. 13. Each of the cable-connecting portion 522 and the relay member-connecting portion 523 is formed to have a flat surface on both sides in the axial direction X, with the outer peripheral surface 52a being curved in an arched cross-section. The embedded portion 521 is formed in such a manner that its diameter increases as being closer to the center of the alignment direction Y. This means that the embedded portion 521 has a different cross-sectional shape depending on the position in the alignment direction Y.

The other configurations in the present embodiment are similar to those of the first embodiment.
In addition, the same symbols and signs used in the second embodiment as those used in the first embodiment represent the constituent elements and the like similar to those used in the first embodiment, unless otherwise indicated.

### (Functions and effects of the second embodiment)

In the present embodiment, the embedded portion 521 has a different cross-sectional shape depending on the position in the alignment direction Y. Therefore, it is easy to secure the adhesion between the embedded portion 521 and the first semi-conductive layer 51b, and it can suppress the misalignment between the embedded portion 521 and the first semi-conductive layer 51b. Also, each of the cable-connecting portion 522 and the relay member-connecting portion 523 is formed in a plate shape with the thickness in the axial direction X, and is formed to have a flat surface on both sides in the axial direction X. Therefore, it is easy to secure the electrical connection between the cable-connecting portion 522 and the cable terminal 4 as well as the electrical connection between the relay member-connecting portion 523 and the relay member 6.

The second embodiment also achieves the same effects as those in the first embodiment.

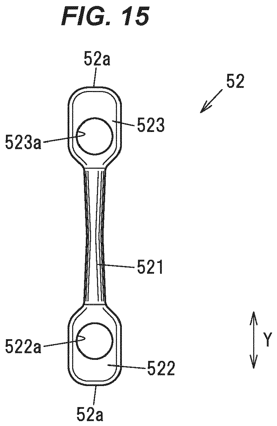

As shown in FIG. 15, the embedded portion 521 may be formed in such a manner that its diameter decreases as being closer to the center of the alignment direction Y. Even in this case, the displacement between the embedded portion 521 and the first semi-conductive layer 51b can be suppressed.

### (Summary of the embodiments)

Next, the technical ideas grasped from the embodiments will be described with the aid of the reference characters and the like in the embodiments. It should be noted, however, that each of the reference characters and the like in the following descriptions is not to be construed as limiting the constituent elements in the appended claims to the members and the like shown explicitly in the embodiments.

According to the feature [1], a cable connection structure 1 includes two connector-equipped cables 2, 2, each of which includes a cable 3 and a connector 5 attached to an end of the cable 3, wherein the connector 5 includes a housing 51 including a first portion 511 to which the end of the cable 3 is inserted and a second portion 512 formed on an outer periphery side of the first portion 511, and wherein the two connector-equipped cables 2, 2 are fitted with each other in an axial direction X of the cable 3 to electrically connect the two connector-equipped cables 2, 2 to each other.

According to the feature [2], in the cable connection structure 1 as described in the feature [1], in the connector-equipped cable 2, where an opposite side with respect to an end of the cable 3 being pulled out from the housing 51 is a distal end side, a distal end of the second portion 512 protrudes more distal than a distal end of the first portion 511.

According to the feature [3], in the cable connection structure 1 as described in the feature [1] or [2], the two second portions 512, 512 are fitted to each other in the axial direction X via a relay member 6, wherein the second portion 512 is formed in a tubular shape opening toward an opposite side with respect to an end of the cable 3 being pulled out from the housing 51, wherein the housing 51 holds a connecting conductor 52 including a cable-connecting portion 522 exposed in the first portion 511 to be connected to the cable 3 and a relay member-connecting portion 523 exposed in the second portion 512, and wherein the relay member 6 is inserted inside each of the two second portions 512, 512 and connects two relay member-connecting portions 523, 523 to each other.

According to the feature [4], in the cable connection structure 1 as described in any one of the features [1] to [3], the first portions 511, 511 of the two connector-equipped cables 2, 2 are located on each other in the axial direction X, and the second portions 512, 512 of the two connector-equipped cables 2, 2 are located on each other in the axial direction X.

According to the feature [5], a connector-equipped cable 2 includes a cable 3 and a connector 5 attached to an end of the cable 3, wherein the connector 5 includes a housing 51 including a first portion 511 to which the end of the cable 3 is inserted and a tubular second portion 512 formed on an outer periphery side of the first portion 511 along the first portion 511.

According to the feature [6], in the connector-equipped cable 2 as described in the feature [5], where an opposite side with respect to an end of the cable 3 being pulled out from the housing 51 is a distal end side, a distal end of the second portion 512 protrudes more distal than a distal end of the first portion 511.

According to the feature [7], in the connector-equipped cable 2 as described in the feature [5] or [6], the housing 51 holds a connecting conductor 52 including a cable-connecting portion 522 exposed in the first portion 511 to be connected to the cable 3 and a portion 523 exposed in the second portion 512.

Although the embodiments of the present invention have been described above, the embodiments mentioned above are not to be construed as limiting the inventions according to the appended claims. Further, it should be noted that not all the combinations of the features described in the embodiments are indispensable to the means for solving the problem of the invention. Further, the present invention can be appropriately modified and implemented without departing from the spirit thereof.

## Claims

1. A connector-equipped cable (2), comprising:
a cable (3); and
a connector (5) attached to an end of the cable (3),
wherein the connector (5) comprises a housing (51) comprising a first portion (511) to which the end of the cable (3) is inserted and a tubular second portion (512) formed on an outer periphery side of the first portion (511).

2. The connector-equipped cable according to claim 1, wherein, where an opposite side with respect to an end of the cable (3) being pulled out from the housing (51) is a distal end side, a distal end of the second portion (512) protrudes more distal than a distal end of the first portion (511).

3. The connector-equipped cable according to claim 1 or 2, wherein the housing (51) holds a connecting conductor (52) comprising a cable-connecting portion (522) exposed in the first portion (511) to be connected to the cable (3), and a portion (523) exposed in the second portion (512).

4. A cable connection structure (1), comprising:
two connector-equipped cables (2, 2) according to any one of claims 1 to 3,
wherein the two connector-equipped cables (2, 2) are fitted with each other in an axial direction (X) of the cable (3) to electrically connect the two connector-equipped cables (2, 2) to each other.

5. The cable connection structure (1) according to claim 4, wherein the two second portions (512, 512) are fitted to each other in the axial direction (X) via a relay member (6),
wherein the portion (523) is a relay member-connecting portion (523), and
wherein the relay member (6) is inserted inside each of the two second portions (512, 512) and connects two relay member-connecting portions (523, 523) to each other.

6. The cable connection structure (1) according to claim 4 or 5, wherein the first portions (511, 511) of the two connector-equipped cables (2, 2) are located on each other in the axial direction (X), and the second portions (512, 512) of the two connector-equipped cables (2, 2) are located on each other in the axial direction (X).
